(19) Europäisches Patentamt
European Patent Office
Office européen des brevets

(11) **EP 4 675 564 A1**

(12) **EUROPEAN PATENT APPLICATION**

(43) Date of publication:
**07.01.2026 Bulletin 2026/02**

(21) Application number: 24306117.3

(22) Date of filing: **04.07.2024**

(51) International Patent Classification (IPC):
*G06T 15/20* (2011.01)

(52) Cooperative Patent Classification (CPC):
**G06T 15/20; G06N 3/045; G06N 3/047;
G06N 3/088;** G06T 2210/61

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Dassault Systèmes
78140 Vélizy-Villacoublay (FR)**

(72) Inventors:
• **RAMANANA RAHARY, Adrien
VELIZY VILLACOUBLAY (FR)**
• **MAILLARD, Léopold
VELIZY VILLACOUBLAY (FR)**
• **DURAND, Tom
VELIZY VILLACOUBLAY (FR)**

(74) Representative: **Bandpay & Greuter
11 rue Christophe Colomb
75008 Paris (FR)**

(54) **GENERATING A PLURALITY OF 2D IMAGES OF 3D SCENE**

(57) The disclosure notably relates to a computer-implemented method for generating a plurality of 20 images of a 3D scene. The method comprises obtaining arrangement data and a machine-learning model configured for generating a 2D image. The method comprises generating a plurality of first 2D images of the 3D scene each having a respective viewpoint. The method comprises, for each generated first 2D image, computing a first latent vector. The method comprises, for each generated first 2D image, computing a second latent vector as a weighted combination of the computed first latent vectors. The method comprises generating a plurality of second 2D images of the 3D scene by applying, for each given viewpoint of the first 2D images, the model to the computed second latent vector. Such a generating method forms an improved solution for generating a plurality of 20 images of a given 3D scene.

| | |
|---|---|
| Obtaining arrangement data and a machine-leanring model configured for generating a 2D image | S10 |
| Generating a plurality of first 2D images of the 3D scene each having a respective viewpoint | S20 |
| Computing a first latent vector for each generated first 2D image | S30 |
| Computing a second latent vector for each generated first 2D image | S40 |
| Generating a plurality of second 2D images of the 3D scene | S50 |

FIG. 1

**Description**

**TECHNICAL FIELD**

The disclosure relates to the field of computer programs and systems, and more specifically to methods, system and program for generating a plurality of 2D images of a 3D scene.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA, 3DVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In this context, applications for 3D scene creation are being developed. These applications generally propose to create, manipulate and furnish 3D scenes, especially (but not exclusively) for touch-sensitive devices (e.g., smartphone or tablet). One task of these applications is the generating of realistic 2D images of the 3D scenes.

Solutions for generating 2D images for 3D scenes have been developed in recent years, e.g., using generative deep learning models. However, these solutions do not fully take into account the entire 3D environment of the scene being imaged. In particular, these solutions do not allow exploiting knowledge of the 3D structures and relationships of objects in scenes or environments. They are therefore unable to produce accurate, natural and immersive content, especially since they do not allow for perspective, occlusion or lighting factors, for example. Moreover, current solutions do not allow generating a plurality of such realistic 2D images of a given 3D scene that are visually and functionally consistent across different viewpoints.

Within this context, there is still a need for an improved solution for generating a plurality 2D images of a 3D scene.

**SUMMARY**

It is therefore provided a computer-implemented method for generating a plurality of 2D images of a 3D scene (hereinafter referred to as the generating method). The method comprises obtaining arrangement data comprising a layout of the 3D scene and a machine-learning model configured for generating a 2D image. The model takes as input a viewpoint, the layout of the 3D scene and a latent vector. The model comprises a scene encoder and a generative image model. The scene encoder takes as input the layout of the 3D scene, the viewpoint and the latent vector, and outputs a scene encoding tensor. The generative image model takes as input the scene encoding tensor outputted by the scene encoder and outputs the generated 2D image. The method comprises generating a plurality of first 2D images of the 3D scene each having a respective viewpoint by, for each first 2D image, applying the model to the respective viewpoint of the first 2D image, the layout of the 3D scene and a respective initial latent vector. The method comprises, for each generated first 2D image, computing a first latent vector by applying a global projector to the generated first 2D image. The method comprises, for each generated first 2D image, computing a second latent vector as a weighted combination of the computed first latent vectors. The method comprises generating a plurality of second 2D images of the 3D scene by applying, for each given viewpoint of the first 2D images, the model to the given viewpoint, the layout of the 3D scene and the computed second latent vector.

The generating method may comprise one or more of the following:

- The computing of the second latent vectors comprises computing a viewpoint overlapping measure for each pair of first 2D images. The second latent vector is a weighted combination of the first latent vectors with the viewpoint overlapping measures;
- The viewpoint overlapping measure of each pair *i, j* of first 2D images is computed based on the formula:

$$similarity_{i,j} = \frac{1 + v_i \cdot v_j}{2} \frac{Area_{inter}}{Area_{union}}$$

wherein $similarity_{i,j}$ is a similarity score, $v_i$ and $v_j$ are unit vectors representing camera directions of respectively the first 2D images $i$, $j$, $Area_{inter}$ and $Area_{union}$ are areas respectively of intersection and union between the viewpoints of the pair $i$, $j$ of first 2D images;

- The viewpoint overlapping measure of each pair $i$, $j$ of first 2D images corresponds to a ratio between a number of objects present in the viewpoints of the pair $i$, $j$ of first 2D images and a number of objects present in each viewpoint of the pair $i$, $j$;
- The arrangement data comprises a respective conditioning signal for each of at least a part of the first 2D images. The generating of the plurality of first 2D images comprises, for each of the at least part of the first 2D images, computing the respective latent vector taken as input by the model for the first 2D image by applying the global projector to the respective conditioning signal of the first 2D image;
- Each conditioning signal has a type among a predetermined set of at least two types;
- The predetermined set of at least two types includes an image type and a text type;
- The generating method further comprises repeating the steps of computing the first and second latent vectors and the generating of a next plurality of 2D image. Each repetition considers the plurality of 2D images generated in the previous repetition to compute the first and second latent vectors for the next plurality of 2D image; and/or
- The steps are repeated until a criterion is reached. The criterion considers the variation of the second latent vectors during iterations.

It is also provided a computer-implemented method for machine-learning a model used in the generating method (hereinafter referred to as the machine-learning method). The machine-learning method comprises obtaining a dataset comprising training samples each including a 2D image, a layout, a viewpoint and a respective latent vector. The machine-learning method comprises training the model based on the obtained dataset.

The machine-learning method may comprise one or more of the following:

- The machine-learning method further comprises, prior to or during the training, replacing a predetermined portion of the respective latent vectors of the dataset by latent vectors having a predetermined value; and/or
- The machine-learning method further comprises, at the same time as the training the model, training the global projector.

It is further provided a computer program comprising instructions which, when the program is executed by a computer, cause the computer to carry out the generating method and/or the machine-learning method.

It is further provided a computer readable storage medium having recorded thereon the computer program.

It is further provided a system comprising a processor coupled to a memory, the memory having recorded thereon the computer program. The system may further comprise a graphical user interface coupled to the processor.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g.* the device is a subsystem of the overall system). The system may further comprise a graphical user interface coupled to the processor.

**BRIEF DESCRIPTION OF THE DRAWINGS**

Non-limiting examples will now be described in reference to the accompanying drawings, where:

- FIGs. 1 and 2 show flowcharts of examples of the generating method and of the machine-learning method;
- FIG. 3 illustrates an example of the scene encoder;
- FIG. 4 illustrates an example of implementation of the generating method;
- FIG. 5 illustrates an example of the viewpoint overlapping measure;
- FIGs. 6 to 8 show examples of results obtained by the generating method and the machine-learning method; and
- FIG. 9 shows an example of the system.

**DETAILED DESCRIPTION**

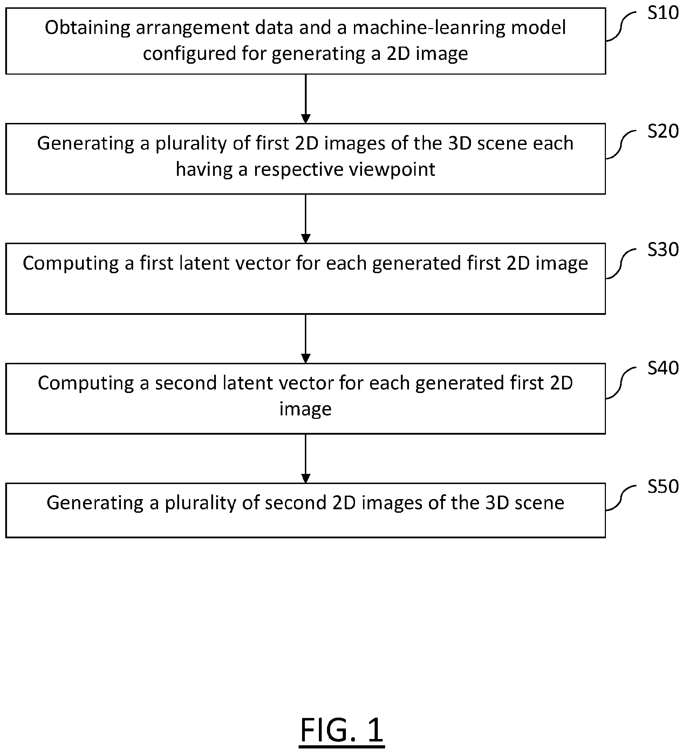

With reference to the flowchart of FIG. 1, it is proposed a computer-implemented method for generating a plurality of 2D images of a 3D scene (hereinafter referred to as the generating method). The method comprises obtaining S10 arrangement data comprising a layout of the 3D scene and a machine-learning model configured for generating a 2D image. The model takes as input a viewpoint, the layout of the 3D scene and a latent vector. The model comprises a scene encoder and a generative image model. The scene encoder takes as input the layout of the 3D scene, the viewpoint and the latent vector, and outputs a scene encoding tensor. The generative image model takes as input the scene encoding tensor outputted by the scene encoder and outputting the generated 2D image. The method comprises generating S20 a plurality of first 2D images of the 3D scene each having a respective viewpoint by, for each first 2D image, applying the model to the respective viewpoint of the first 2D image, the layout of the 3D scene and a respective initial latent vector. The method comprises, for each generated first 2D image, computing S30 a first latent vector by applying a global projector to the generated first 2D image. The method comprises, for each generated first 2D image, computing S40 a second latent vector as a weighted combination of the computed first latent vectors. The method comprises generating S50 a plurality of second 2D images of the 3D scene by applying, for each given viewpoint of the first 2D images, the model to the given viewpoint, the layout of the 3D scene and the computed second latent vector.

Such a generating method forms an improved solution for generating a plurality of 2D images of a given 3D scene.

Notably, the generating method allows automatically and efficiently generating a plurality of 2D images of a given 3D scene. In particular, the applying of the model allows generating (various and realistic) 2D images from a high-level, abstract and proxy representation of the 3D scene (that is therefore easy to define). Indeed, the training enables the model to generate a 2D image of a 3D scene from a layout of the 3D scene, a latent vector and a viewpoint only. From the layout, the latent vector and the viewpoint, the trained model allows generating a 2D image, which is particularly useful and interesting for illustrating objects in 3D scenes. Notably, providing these two inputs to the trained model is much easier for the user than providing a precise object model for each object in the 3D scene and then using traditional rendering methods. Hence, the trained model enables a user to easily and quickly generate a plurality of 2D images of 3D scenes he or she is building, simply by defining their layout and providing viewpoints for these images.

In particular, the model generates particularly realistic and relevant 2D images of 3D scenes. Indeed, the model comprises a scene encoder that allows the layout in the generated 2D image to be taken into account. Hence, the model is able to generate 2D images that take into account the perspective of the 3D scene and its lighting, as well as occlusions between objects (the scene encoder allowing this information to be taken into account during the generation of the 2D images). In other words, the 2D image generated by the trained model is 3D-aware, i.e., it takes into account the 3D environment of the 3D scene. Notably, the method allows taking into account off-screen objects of the 3D scene when generating the 2D image, i.e., objects that are not in the sight of the camera will have an impact on the generated image (e.g., lightning from a window).

Moreover, the method allows generating multiple 2D images of a given scene that are visually and functionally consistent across different viewpoints using a 3D-Aware, style-conditioned generative model. Indeed, the method generates each second 2D image by applying the model conditioned by the second latent vector computed as a weighted combination of the computed first latent vectors, which allows increasing the visual and functional consistency across the generated second 2D images. By visual and functional consistency, it means that the overall appearance of the generated second 2D images of the scene and its elements is as close as possible from one another, thus reinforcing the impression that a single scene has been rendered from multiple viewpoints.

Furthermore, the generating method has the crucial advantage of being efficient in terms of computation and implementation. Indeed, it is an inference method that, firstly, does not rely on a costly optimization to maintain coherence across multiple views and, secondly, does not require to (re)train a dedicated neural network for the task, and therefore does not rely on multi-view datasets that are typically hard to acquire. It may easily be implemented to be used with an existing model at inference. Furthermore, the generation of multiple coherent 2D images of a scene may be parallelized at inference by leveraging batching.

Furthermore, the proposed machine learning method is trained end-to-end for the task in a single training phase. It does not rely on large pretrained image generation models or pretrained depth estimators.

The generating method and/or the machine-learning method is/are computer-implemented. This means that steps (or substantially all the steps) of the generating method and/or the machine-learning method are executed by at least one computer, or any system alike. Thus, steps of the generating method and/or the machine-learning method are performed by the computer, possibly fully automatically, or, semi-automatically. In examples, the triggering of at least some of the steps of the generating method and/or the machine-learning method may be performed through user-computer interaction. The level of user-computer interaction required may depend on the level of automatism foreseen and put in balance with the need to implement user's wishes. In examples, this level may be user-defined and/or predefined.

For examples, in the generating method, the step of obtaining S10 the arrangement data may comprise executing a user generating process for generating, upon user interactions (e.g., carried out by a user, for example currently designing the 3D scene), the layout of the 3D scene taken as input by the model. For example, the user generating process may comprise determining one or more (e.g., all) of the bounding box that the 3D scene includes. The determining of a given bounding box may be performed in any manner. For example, the determining of a given bounding box may comprise a step of sizing of the given bounding box and a step of positioning of the sized given bounding box inside of the 3D scene. The steps of sizing and positioning may be performed manually by the user. For example, the step of sizing may comprise entering by the user the width, the depth and the height (e.g., through user interaction using a keyboard). The step of positioning may comprise entering by the user coordinates of a point on the bounding box (e.g., a corner or its center) and its orientation, or may comprise moving by the user the bounding box to its location in the 3D scene (e.g., the bounding box may be displayed on a screen and may be moved by the user using a mouse). In examples, the step of sizing may be performed semi-automatically. For example, the step of sizing may comprise selecting, by the user, a category of the object represented by the given bounding box and suggesting automatically a size (e.g., a width, a depth and a height) for the given bounding box according to the selected category (e.g., from a database storing default sizes for different categories of object). The suggested size may be accepted by the user or may then be refined by the user (e.g., manually as previously discussed). For example, if the user wants to add a couch to its 3D layout, the user generating process may suggest a default bounding box that match the object category entered by the user, while letting the user modify these dimension values.

Alternatively or additionally, the user generating process may comprise determining the boundaries of the 3D scene. The determining of the boundaries of the 3D scene may be performed in any manner. For example, the determining of the boundaries of the 3D scene may comprise determining a respective set of points representing the boundaries of the 3D scene. For example, the determining of the boundaries may comprise determining some of the points in the set (e.g. representing the corners of the 3D scene) and then sampling the other points on the boundary between these points representing the corners of the 3D scene (i.e., along the walls of the 3D scene).

In other examples, the step of obtaining S10 of the arrangement data may comprise retrieving, e.g., from a database, the arrangement data taken as input by the model. In that case, the arrangement data may have been generated prior to the executing of the generating method, e.g., using the aforementioned user generating process, and may have been recorded on the said database after the executing of the user generating process. Similarly, the obtaining of the machine-learning model may comprise retrieving the machine-learning model from the database. The model may have been recorded on the said database after being trained by executing the machine-learning method.

In examples, the generating method may also comprise obtaining the respective viewpoint of each of the first 2D images (the respective viewpoint of each of the first 2D images forming a set of viewpoints). The obtaining of this set of viewpoints may comprise determining each of viewpoint of this set, e.g., upon user interaction. The determining of each viewpoint may comprise setting parameters of a camera from which the first 2D image is generated. These parameters may include a camera position, a field of view and/or a pitch. The determining of these parameters may be comprise entering them manually by the user, and optionally suggesting at least part of them to the user (e.g., with default values). For example, the determining of the viewpoint may be performed by the user, e.g., by entering the coordinates and/or orientation of the viewpoint or by selecting this information on a screen displaying the 3D scene. Alternatively, the determining of the set of viewpoints may be performed automatically, e.g., by another function predicting a set of relevant viewpoints for a 3D scene considering its layout. Alternatively yet, these two methods for determining viewpoints may be combined, and some of the viewpoints may be predicted while other may be entered manually by a user.

In examples, the arrangement data may also comprise at least one conditioning signal. The at least one conditioning signal may include one or more conditioning signals for the 3D scene. In that case, each conditioning signal for the 3D scene may be associated with a respective viewpoint, and, for generating the first 2D image from this respective viewpoint, the respective initial latent vector taken as input by the model may be the projection, by the global projector, of this conditioning signal for the 3D scene. Each conditioning signal for the 3D scene may condition the 3D scene as a whole, for example the atmosphere or mood in the 3D scene as a whole. The conditioning signal for the 3D scene may be of the image type or of the text type.

Alternatively or additionally, the at least one conditioning signal may include one or more conditioning signals each for the object represented by one of at least a part of the bounding boxes. For example, the arrangement data may include one or more conditional signals for each of at least a portion (e.g., all) of the objects present the 3D scene (each being represented by a respective bounding box in the layout). In that case, the layout encoder of the scene encoder may additionally take as input the projection of the one or more conditioning signals for object(s) of the 3D scene. In other words, the projection of the one or more conditioning signals for object(s) may be included in the parameters taken as input by the layout encoder for conditioning the appearance/aspect of these object(s).

The conditioning signal for the 3D scene and/or the one or more conditioning signals each for object(s) may have been selected. For example, the obtaining of the arrangement data may comprise selecting, upon user interaction, the at least one conditioning signal. Each selected conditioning signal may, for example, be stored in a database, and the inputting may comprise a selection operation by the user of this stored conditioning signal. The type of each conditioning signal may be among a predetermined set of at least two types, which may include an image type and a text type. In that case, the global projector may be a multimodal encoder. The multimodal encoder may be any model configured for projecting several types of conditioning signal into a single latent space, such as the Contrastive Language-Image Pre-Training (CLIP) model. A conditioning signal of the image type may be a 2D image of a 3D scene or object. A conditioning signal of the text type may be a free text (e.g., dialog boxes), e.g., describing an atmosphere of a room or an object.

A typical example of computer-implementation of the generating method and/or the machine-learning method is to perform the generating method and/or the machine-learning method with a system adapted for this purpose. The system may comprise a processor coupled to a memory and a graphical user interface (GUI), the memory having recorded thereon a computer program comprising instructions for performing the generating method and/or the machine-learning method. The memory may also store a database. The memory is any hardware adapted for such storage, possibly comprising several physical distinct parts (e.g. one for the program, and possibly one for the database).

The dataset considered by the machine-learning method for training the model may be stored in a database. By "database", it is meant any collection of data (i.e., information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The generating method and/or the machine-learning method generally manipulate modeled (3D) objects. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system.

By CAD system, it is additionally meant any system adapted at least for designing a modeled object on the basis of a graphical representation of the modeled object, such as CATIA. In this case, the data defining a modeled object comprises data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones.

In examples, each 3D scene may represent a real room, e.g., an indoor real room. For examples, the room represented by the 3D scene may be a room of a dwelling (e.g., a house or apartment), such as a kitchen, a bathroom, a bedroom, a living room, a garage, a laundry room, an attic, an office (e.g. individual or shared), a meeting room, a child room, a nursery, a hallway, a dining room and/or a library (this list may include other types of rooms). Alternatively, the room represented by the 3D scene may be another indoor room, such as a factory, a museum and/or a theater. Alternatively, the room represented by the 3D scene may be an outdoor scene, such as a garden, a terrace or an amusement park.

Each object of each 3D scene may represent the geometry of a real object positioned in the real room that the 3D scene represents. This real object may be manufactured in the real world subsequent to the completion of its virtual design (e.g., using a CAD software solution or a CAD system). The 3D scene may for example comprise one or more furniture objects, such as one or more chairs, one or more lamps, one or more cabinets, one or more shelves, one or more sofas, one or more tables, one or more beds, one or more sideboards, one or more nightstands, one or more desks and/or one or more wardrobes. Alternatively or additionally, the 3D scene may comprise one or more decorative objects, such as one or more accessories, one or more plants, one or more books, one or more frames, one or more kitchen accessories, one or more cushions, one or more lamps, one or more curtains, one or more vases, one or more rugs, one or more mirrors and/or one or more electronic objects (e.g., refrigerator, freezer and/or washing machine).

The ability to generate a plurality of 2D images of a given scene that are both realistic and consistent opens up a wide range of practical applications. Indeed, these practical applications may seek to generate several views of the same scene without removing or adding visual elements or altering those that are represented on several generated views. On top of that, multi-view consistency is a major requirement to achieve successful 3D reconstruction, i.e., reconstructing a 3D model from multi view images of a scene. Examples of such practical applications in which the generating method may be included are now provided in the following paragraphs.

The generating method may be included in a real-life room design (i.e., effective arrangement) process, which may comprise, after performing the generating method, using the generated plurality of second 2D images for illustrating a room to be arranged. For example, the illustration may be for a user such as the owner of the home in which the room is located. The generated plurality of second 2D images may be used by the user for deciding whether or not to acquire one or more objects inside the 3D scene and may assist the user's choice by showing the objects in the room from different viewpoints. The plurality of second 2D images may be used to illustrate a complete virtual interior of the room (i.e., including several 2D images of the room), as it contains several 2D images of the 3D scene that are visually and functionally consistent across different viewpoints.

Alternatively or additionally, the real-life room design may comprise using the generated plurality of second 2D images for performing a similarity-based retrieval of 3D objects from a catalog to be placed at the bounding box locations. The trained model enables this thanks to the realism of the generated plurality of second 2D images. For example, the real-life room design may comprise defining by a user the layout of a given 3D scene by placing 3D bounding boxes. Then, the real-life room design may comprise generating a plurality of 2D images of the given 3D scene using the generating method. The user may then particularly appreciate the look and/or style of the 3D scene illustrated by the generated plurality of 2D images and want to furnish the given 3D scene with the most similar 3D objects from a catalog (i.e., replace the bounding boxes by actual 3D objects). In that case, the real-life room design may comprise, for each object of the 3D scene, deriving the location of each object in the generated plurality of 2D images from the defined layout, cropping the object in one of the generated 2D image, computing an image embedding of the object (e.g., using a pre-trained language-image model, such as the one described in the paper by Radford, et al. "Learning transferable visual models from natural language supervision", International conference on machine learning, PMLR 2021, hereinafter referred to as CLIP), comparing this image embedding of the object with ones from the catalog so as to get the most similar object. The real-life room design may comprise replacing the bounding boxes in the 3D scene by the most similar objects of the catalog obtained for each object.

Alternatively or additionally (e.g., prior to the illustration), the real-life room design process may comprise populating the 3D scene (which may be initially, e.g. partially, empty) representing a room with one or more new objects by modifying the layout of the 3D scene. The populating may comprise repeating, for each new object, the steps of sizing and positioning of a bounding box representing the new object as previously discussed. The generated 2D image may hence include the new objects added to the 3D scene by the modification of the layout. The real-life room design process allows creating richer, more pleasant environments (for animation, advertising and/or for generating virtual environments, e.g. for simulation). The real-life room design process may be used for generating virtual environments. The real-life room design process may be included in a general process which may comprise repeating the real-life room design process for several 3D scenes, thereby illustrating several 3D scenes with objects.

Alternatively or additionally, the real-life room design process may comprise, after the performing of the method, physically arranging a (i.e., real) room so that its design matches the 3D scene illustrated with the generated plurality of second 2D images. For example, the room (without the object represented by the input 3D scene) may already exist in the real world, and the real-life room design process may comprise positioning, inside the already existing room (i.e., in the real world), a real object represented by one of the objects of the 3D scene (i.e., an object represented by one of the bounding boxes of the layout). The bounding box of this object may have been added to the layout of the 3D scene by the user. The real object may be positioned according to the position of its bounding box inside the 3D scene. The real-life room design process may repeat this process for positioning different real objects inside the already existing room. Alternatively, the room may not already exist at the time the method is executed. In that case, the real-life room design process may comprise building a room (i.e., including populating this room with real objects) according to the generated 2D image of the 3D scene (i.e., by placing the real objects at the position of the bounding boxes that represent them in the layout of the 3D scene). Because the method improves the positioning of the 3D objects in the 3D scene, the method also improves the building of a room corresponding to the 3D scene and thus increases productivity of the real-life room design process.

The step of obtaining the dataset of training samples is now discussed.

The dataset comprises a plurality of training samples each including a 2D image (e.g., more than 50.000 training samples, e.g., including 2D images of same type of rooms). The dataset also includes, for each training sample, the arrangement data of the 3D scene that is imaged (e.g., partially) in the 2D image that the training sample includes (e.g., the layout of the 3D scene and/or the conditioning signals), and the viewpoint from which the 2D image is taken (e.g., the coordinates of the viewpoints inside the 3D scene). In the dataset, a portion (e.g., all) of the conditioning signals for objects may be 2D images of these objects stored on a database (e.g., initially retrieved using a reference of the object). Each 2D image included in a training sample may be taken for a respective (i.e., different) 3D scene. Alternatively, the dataset may comprise training samples including 2D images of same 3D scenes, e.g. taken from different viewpoints and/or with different lighting. The dataset may also comprise information indicating, for each training sample, the layout of the 3D scene that the 2D image illustrates, and its viewpoint (for example, a table comprising lines each including a 2D image reference, a reference to the layout of the corresponding 3D scene and the coordinates of the viewpoint of the 2D image).

At least part of the training samples of the dataset (e.g., more than 50 or 75% of the training samples) may include conditioning signals for the 3D scenes and/or for objects inside of the 3D scenes. The conditioning signals of the at least part of the training samples may include at least one first conditioning signal having a first type among the predetermined set of at least two types and at least one second conditioning signal having the second type among the predetermined set of at least two types. For example, the dataset may include at least one conditioning signal of the text type and at least one conditioning signals of the image type for most of the training samples (e.g., more than 75% or 80% of the training sample). It allows training the model to consider both the first and second types. Alternatively, the dataset may include conditioning signals of the same type only (text or image). In that case, for training the function to consider both the first and second types, the machine-learning method may comprise generating conditioning signals of the other type prior to the training (e.g., using the image or text generators as discussed below), or alternatively the scene encoder may comprise the multimodal encoder (such as CLIP) since it is capable of taking as input conditioning signals of another type.

The 2D images included in the training samples of the dataset may be realistic 2D images of 3D scenes produced prior to the executing of the method (e.g., by designers). These 2D images may, for example, include perspectives, occlusions and/or lighting factors. To achieve such a rendering, the 2D images of 3D scenes in the dataset may have been manually reworked by designer(s) (at least partially, for example in places where the rendering is difficult due to perspectives, occlusions and/or lighting factors).

The dataset may be stored in a database. The obtaining of the dataset may comprise retrieving the dataset from the database. Then, the obtaining of the dataset may comprise storing the retrieved dataset in memory. After the recording, the machine-learning method may perform the training of the model based on the recorded dataset. Alternatively, the obtaining of the dataset may comprise providing an access to the dataset in the database. In that case, the machine-learning method may use this access to perform the training of the model.

The rooms represented by the 3D scenes in the dataset may or could exist in the real world (already now at the time of the obtaining of the dataset or in the future). For example, the rooms may be actual real rooms (in terms of layout) of the real world, and the objects may be positioned inside these real rooms as specified in the layout of the 3D scene that the dataset comprises. The 3D scenes may represent rooms that have been designed (for example by interior designers), and then implemented in the real world (i.e., the plurality of 3D scenes corresponds to virtually designed rooms that have been, or could be, reproduced in people's homes). In examples, each room represented in the dataset is of the same type. For example, all the rooms represented in the dataset and the 3D scene may be kitchens, bathrooms, bedrooms, living rooms, garages, laundry rooms, attics, offices (e.g. individual or shared), meeting rooms, child rooms, nurseries, hallways, dining rooms or libraries (this list may include other types of rooms). In that case, the layout obtained during the executing of the generating method may be a layout of a 3D scene that is also of the same type as those in the dataset. It allows generating more realistic 2D images and increases stability of the generating method. Alternatively, the dataset may include rooms of different types. In that case, the output domain of the generative image model is larger, and the number of rooms represented in the dataset may be higher. The training of the generative image model may also be longer.

In examples, the layout of each 3D scene may include a set of bounding boxes representing objects in the 3D scene. Each bounding box may be rectangular in space and may encapsulate an external envelope of the object it represents. The layout may comprise, for each bounding box, parameters representing a position, a size and an orientation in the 3D scene of the object represented by the bounding box. For example, the layout may comprise, for each bounding box, parameters representing a position of the bounding box (e.g., coordinates of a corner or of the center of the bounding box), parameters representing a size of the bounding box (e.g., a width, a depth and a height of the bounding box) and parameters representing an orientation of the bounding box (e.g., a rotation with respect to each axis of a global reference frame). Optionally, the layout may comprise, for each bounding box, parameters representing a class of the object represented by the bounding box. The classes of objects may be predetermined and may each correspond to the type of object it represents. The classes of objects may be the types of decorative and functional objects discussed above.

The layout of each 3D scene may also include the boundaries of the 3D scene. For example, the boundaries of the 3D scene may be represented by a respective set of points, e.g., corresponding to the corners of the 3D scene or sampled along the walls of the 3D scene. The layout of a 3D scene may comprise the coordinates of the points of its respective set.

The training of the model may comprise training the scene encoder and the generative image model to generate the 2D images of the dataset when they take as input the corresponding layouts and viewpoints included in the dataset (e.g., in a supervised manner). For example, the scene encoder and the generative image model may each comprise respective parameters (e.g. weights), and the supervised training may consist in determining the values of these respective parameters so that they best reproduce the 2D images of the dataset when they take as input the corresponding layouts, viewpoints and latent vectors included in the dataset. The supervised training of the model may comprise training the scene encoder and the generative image model together (i.e., it may determine their respective parameters at the same time, or during a same process). In examples, the global projector may also be trained together with the model. For example, the global projector may also comprise respective parameters (e.g. weights), and the training may comprise determining the values of these respective parameters of the global projector. In that case, the dataset may comprise, for at last a portion of the training sample, conditioning signals, and, during the training, the latent vectors considered may be the projection, by the global projector, of these conditioning signals.

In examples, the machine-learning method may further comprise, prior to or during the training, replacing a predetermined portion of the respective latent vectors of the dataset by latent vectors having a predetermined value. This predetermined value may represent a null value (i.e., the value used when there is no conditioning signal). For example, at each iteration of the training, the replacing may comprise determining (e.g., with a given probability) whether to keep or drop the latent vectors of the training samples. Alternatively, the determining of whether to keep or drop the latent vectors may be performed before the training. Performing the replacement at each iteration increases the variability (and therefore the accuracy of the trained function), as performing the replacing before the training only results in always having the same conditioning sets for each training sample in the dataset. The replacing of the predetermined portion of the respective latent vectors of the dataset increases the flexibility of the trained model. Indeed, when the model has been trained with conditioning dropout on the latent vector, the model can then be used both conditionally (when an input latent vector is given) or unconditionally (without latent vector). When the training also includes the training of the global projector, the replacing of the predetermined portion of the respective latent vectors of the dataset may comprise replacing the conditioning signals of the dataset corresponding to these latent vectors.

In examples, the scene encoder may include a layout encoder configured for encoding the set of bounding boxes. The layout encoder may take as input, for each bounding box of the set (e.g., visible or not from the viewpoint), the parameters representing the position, the size and the orientation in the 3D scene of the object represented by the bounding box. Optionally, the layout encoder may additionally take as input, for each bounding box, a parameter representing the class of the object represented by the bounding box. These parameters may be those included in the layout of the 3D scene as previously discussed. The layout encoder may deduce these parameters from the layout taken as input by the model. The layout encoder may be configured for outputting a vector (hereinafter referred to as the "layout vector") embedding the said parameters.

For example, the layout encoder may comprise a positional encoding module taking as input the parameters of the bounding boxes and outputting the layout vector. The positional encoding module may be configured for deterministically increasing the dimension of the scalar values of the parameters taken as input. For example, the positional encoding module may be configured for outputting, for each bounding box, a positional vector representing the position and size of the bounding box and an orientation vector representing the orientation of the bounding box. Optionally, the layout encoder may further comprise a first multi-layer perceptron encoder configured for increasing the dimension of the orientation vector outputted by the positional encoding module. The layout encoder may also include a concatenation layer configured for concatenating the vectors outputted by the positional encoding module and/or the first multi-layer perceptron encoder and for outputting the said layout vector.

In examples, the model may be included in a function that further includes the global projector. The global projector may be configured for projecting each generated first 2D image into a latent space. Each latent vector may be included in this latent space. In examples, the global projector may be a multimodal encoder. The multimodal encoder may be configured for projecting each conditioning signal into a single latent space. The multimodal encoder may be any model configured for projecting several types of conditioning signal into a single latent space, such as the Contrastive Language-Image Pre-Training (CLIP) model. When the arrangement data includes one or more conditioning signals for object(s), the layout encoder may additionally take as input, for each bounding box of the at least a part of the bounding boxes, the projection of each conditioning signal for the object represented by the bounding box. In other words, the projection of the one or more conditioning signals for object(s) of the 3D scene may be included in the parameters taken as input by the layout encoder. In that case, the layout encoder may additionally comprise a second multi-layer perceptron taking as input, the projection of the conditioning(s) signal(s) for the object(s) and outputting a conditioning signal vector. The concatenation layer of the layout encoder may be configured for concatenating the outputted conditioning signal vector altogether with the other vector(s) outputted by the positional encoding module and/or the first multi-layer perceptron encoder.

In examples, the scene encoder may further include the floor encoder configured for encoding the boundaries of the 3D scene. As previously discussed, the boundaries of the 3D scene may be represented by a respective set of points, and the floor encoder may take as input this respective set of points and output a floor vector. For example, the floor encoder may comprise a PointNet model (e.g., as described in the paper by Charles R. Qi, Hao Su, Kaichun Mo, and Leonidas J. Guibas., "Pointnet: Deep learning on point sets for 3d classification and segmentation", in CVPR 2017) configured for encoding the respective set of points, and optionally a multi-layer perceptron configured for taking as input the output of the PointNet model.

In examples, the scene encoder may further include the camera encoder configured for encoding the viewpoint. For example, the viewpoint may comprise parameters of a camera from which the 2D image is generated (e.g., a camera position, a field of view and a pitch). The scene encoder may be configured for taking as input these camera parameters and outputting a camera vector. For example, the scene encoder may comprise a positional encoder configured for taking as input the camera parameters, and optionally a multi-layer perceptron.

In examples, for each given 2D image of a given 3D scene in the dataset, the size and the position of the object represented by the bounding boxes in the layout of the given 3D scene are defined in a coordinate system that is based on a position and an orientation of a camera from which the given 2D image is taken. Hence, the camera position is already encoded in the layout vector outputted by the layout encoder. The viewpoint may therefore only comprise two scalar values representing respectively the field of view and the pitch of the camera. It allows reducing the number of learned parameters, increasing robustness and thus facilitating convergence of the model.

In examples, the scene encoder may further include the transformer encoder. The transformer encoder takes as input a concatenation of the set of bounding boxes encoded by the layout encoder (i.e., the layout vector), the viewpoint encoded by the camera encoder (i.e., the camera vector) and the boundaries of the 3D scene encoded by the floor encoder (i.e., the floor vector). When the arrangement data includes one or more conditioning signals for the 3D scene, the projection, by the multimodal encoder, of the one or more conditioning signals for the 3D scene may be included in the concatenation taken as input by the transformer encoder. The transformer encoder outputs the scene encoding tensor. For example, the transformer encoder may comprise a transformer model configured for taking as input a vector to form a sequence of tokens represented as a tensor (the said scene encoding tensor). The vector taken as input by the transformer model may be a concatenation of all the previously discussed vectors (i.e., the layout vector, the camera vector, the floor vector and optionally the projection(s) of the one or more conditioning signals for the 3D scene), optionally padded (or supplemented) by one or more "zero" tokens so as to constitute a vector of fixed (e.g., predetermined) size.

The generative image model may be any generative image model capable of generating a 2D image conditioned on the outputted scene encoding tensor. A generative image model may be a type of deep neural networks, which is trained on large image datasets to learn the underlying distribution of the training images. By sampling from the learned distribution, such model may be configured for producing new images that possess characteristics from the ones in the training dataset. Examples of generative image models for generating 2D images conditioned on the outputted scene encoding tensor include Generative Adversarial Networks (GANs), Variational Autoencoders (VAEs) and diffusion models.

In examples, the generative image model may be a diffusion model. The diffusion model may be configured for generating the outputted 2D image by iteratively removing noise from an initial noisy image based on the scene encoding tensor outputted by the scene encoder. Examples of diffusion models include cascade models or latent diffusion models. Cascade models are models that include several diffusion modules, e.g., one for outputting an image conditioned on the scene encoding tensor, and then super-resolution models to upscale this image to a higher resolution. During inference, the diffusion model may generate the outputted 2D image by iteratively removing noise from an initial noisy image. Each iteration of the removing of the noise may comprise determining a new version of the initial noisy image which is less noisy than a previous version of the initial noisy image determined during the previous iteration. The determining of the new version may be based on a prediction of the noise in the previous version.

The training of the diffusion model is now discussed. The training of the diffusion model may be based on produced noisy versions of the 2D images that the dataset includes. For example, the machine-learning method may comprise producing noisy versions of the 2D images of the dataset (by adding noise to these 2D images), and the training of the diffusion model may be based on the produced noisy versions of the 2D images. The diffusion model may be trained to remove the noise added in the 2D images of the dataset considering the scene encoding tensors outputted by the scene encoder. In that case, the training of the diffusion model and the scene encoder may consider a training loss penalizing a distance between a noise predicted in the generated noisy versions and an actual noise in the produced noisy versions.

In examples, the diffusion model may have an architecture that includes a denoiser. The denoiser may comprise several blocks configured for producing the generated 2D image. At least one of these blocks may be enhanced with cross-attention using the scene encoding tensor. The cross-attention mechanism may be the attention mechanism applied between elements from different sequences. The cross-attention may be applied between the representations returned by the transformer encoder for the different tokens, and visual features computed within the denoiser. It improves the ability of the model to learn the visual and spatial dependencies/relationships that exist between scene features (encoded by the transformer encoder) and their visual representation in the image (produced by the denoiser). This mechanism is therefore particularly well-suited to the generating of 2D images of 3D scenes, for which the position/notion of spatiality of objects in the 2D image is paramount.

In examples, the diffusion model may be configured for operating in a latent space (i.e., may be a latent diffusion model). In that case, during the training, the diffusion model may be trained for denoising compressed latent representations of the 2D images of the dataset. In that case, the training of the model may comprise compressing the 2D images of the dataset in the latent space (e.g., of smaller dimension), thereby obtaining the compressed latent representations. The training may be performed based on these compressed latent representations (instead of the 2D images directly). During inference, the diffusion model may take as input, instead of an initial noisy tensor, a compressed initial noisy tensor of same dimension than the compressed latent representations. The diffusion model may iteratively remove noise from this compressed initial noisy tensor considering the scene encoding tensor outputted by the scene encoder. After that, a decompression may be applied on the result so as to obtain the generated 2D image. Examples of implementation of such compression/decompression include Variational Autoencoders (VAEs).

The applying of the model is now discussed. The applying of the model may comprise initially a step of forming the input of the generative image model. When the generative image model does not operate in the latent space, this step may comprise sampling an initial noisy tensor, e.g., having the shape of the 2D image to be generated. This initial noisy tensor may be taken as input by the generative image model. When the generative image model operates in the latent space, this step may comprise sampling the compressed initial noisy tensor (i.e., having same dimension than the compressed latent representations). This compressed initial noisy tensor may be taken as input by the generative image model.

Then, the applying of the model may comprise the applying of the scene encoder to the obtained layout, viewpoint and latent vector thereby outputting a scene encoding tensor. After that, the applying of the model may comprise using the generative image model conditioned on the outputted scene encoding tensor for generating the 2D image of the 3D scene. The generative image model may iteratively remove noise from the sampled initial noisy tensor when not operating in the latent space or otherwise to its compressed representation. When operating in the latent space, the applying of the model may further comprise a step of decompressing a clean latent (obtained by iteratively applying the denoiser) to get back to the image space and obtain the generated 2D image.

At step S20, the machine-learning method generates the plurality of first 2D images by applying the model as previously discussed. In particular, for each given viewpoint of the set considered, the machine-learning method generates a respective first 2D image by applying the model to the given viewpoint, the respective initial latent vector associated with the given viewpoint (e.g., the projection of a conditioning signal) and the layout included in the arrangement data. The machine-learning method thus generates a respective first 2D image for each viewpoint (by conditioning the model with the respective initial latent vector). Similarly, at step S50, the machine-learning method generates the plurality of second 2D images by applying the model as in step S20 but, instead of applying the model to the respective initial latent vectors, the model is applied to the second latent vector computed for each first 2D image generated at step S40. For each generated first image, the machine-learning method thus generates a respective second 2D image having the same viewpoint and layout, but this time by conditioning the model with the second latent vector computed at step S40.

At step S30, the machine-learning method computes, for each first 2D image generated at step S20, a first latent vector by applying a global projector to the generated first 2D image. The machine-learning method therefore computes a first latent vector for each first 2D image generated at step S20. All the computed first latent vectors may be included in the same latent space. For each generated first 2D image, the global projector is configured for taking as input the generated first 2D image and for outputting the first latent vector.

Then, at step S40, the machine-learning method computes, for each first 2D image generated at step S20, a second latent vector as a weighted combination of the computed first latent vectors. Thus, the machine-learning method computes a second latent vector for each generated first 2D image. This second latent vector is taken as input by the model for generating a second 2D image, instead of the respective initial latent vector, as previously discussed. Each computed second latent vector is also included in the same latent space as the first latent vectors.

The computing of a given second latent vector for a given first 2D image is now discussed. These details apply equally for each second latent vector computed at step S40. The computing of the given second latent vector may comprise computing a respective set of weights comprising a respective weight (e.g., a real number between 0 and 1) for each other first latent vector. The respective weight may represent a closeness between the two first 2D images. The computing of the given second latent vector may comprise computing a weighted combination of the computed first latent vectors using the computed respective set of weights. The weighted combination may be a weighted sum of the computed first latent vectors, each weighted by its respective weight. The computed given second latent may correspond to the computed sum.

In examples, the computing S40 of the second latent vectors may comprise computing a viewpoint overlapping measure for each pair of first 2D images. The second latent vector may be a weighted combination of the first latent vectors with the viewpoint overlapping measures. The viewpoint overlapping measure computed for each pair of first 2D images may correspond to the weight representing the closeness between the two first 2D images of the pair. In particular, the viewpoint overlapping measure between two first 2D images may represent the closeness in terms of viewpoint of the two first 2D images. In particular, the viewpoint overlapping measure may measure the overlapping of the viewpoints of the two first 2D images. The viewpoint overlapping measure may be computed in any manner. For example, the viewpoint overlapping measure of each pair $i, j$ of first 2D images may be computed based on the formula:

$$ similarity_{i,j} = \frac{1 + v_i \cdot v_j}{2} \frac{Area_{inter}}{Area_{union}} $$

wherein $similarity_{i,j}$ is a similarity score, $v_i$ and $v_j$ are unit vectors representing camera directions of respectively the first 2D images $i, j$, $Area_{inter}$ and $Area_{union}$ are areas respectively of intersection and union between the viewpoints of the pair $i, j$ of first 2D images. The unit vector $v_i$ of each first 2D image $i$ may represent the direction of the camera associated with the first 2D image (i.e., with which the first 2D image is acquired). This unit vector $v_i$ may be directed from the camera position (from which the first 2D image is acquired). The areas $Area_{inter}$ and $Area_{union}$ may be computed by projecting the volume visible from each viewpoint of each first 2D image onto a 2D plane representing the floor of the 3D scene. The areas $Area_{inter}$ and $Area_{union}$ may be respectively the intersection and union of the projections of the viewpoints of the first 2D images $i, j$. The respective sets of weights may be deduced from the viewpoint overlapping measures, e.g., by normalizing the viewpoint overlap measures between 0 and 1.

In other examples, the machine-learning method may use other viewpoint overlapping measures. For example, the viewpoint overlapping measure of each pair $i, j$ of first 2D images may correspond to a ratio between a number of objects present in the viewpoints of the pair $i, j$ of first 2D images and a number of objects present in each viewpoint of the pair *i, j*. The number of objects present in a given viewpoint may be the number of objects that are visible (e.g., partially or totally) in the first 2D image acquired from this given viewpoint. As for the previously presented example of viewpoint overlapping measure, the respective sets of weights may be deduced from the viewpoint overlapping measures, e.g., by normalizing the viewpoint overlap measures between 0 and 1.

In examples, the machine-learning method may comprise repeating the steps of computing the first and second latent vectors and the generating of a next plurality of 2D image. Each repetition may consider the plurality of 2D images generated in the previous repetition to compute the first and second latent vectors for the next plurality of 2D image. Each iteration may comprise, for each first 2D image generated at the previous iteration, computing a new first latent vector by applying a global projector to the first 2D image generated at the previous iteration (in the same way as in step S30). Each iteration may then comprise, for each first 2D image generated at the previous iteration, computing a new second latent vector as a weighted combination of the computed new first latent vectors (in the same way as in step S40). Each iteration may then comprise generating a plurality of new second 2D images of the 3D scene by applying, for each given viewpoint of the first 2D images, the model to the given viewpoint, the layout of the 3D scene and the computed new second latent vector (in the same way as in step S50). The repetition of these steps allows increasing the visual and functional consistency across the different viewpoints in the plurality of 2D images generated at each iteration.

In examples, the steps may be repeated until a criterion is reached. This criterion may for example consider the variation of the second latent vectors during iterations. For example, at each iteration, the computed new second latent vectors may be compared with the second latent vectors computed at the previous iteration, and when the variation between the previous second latent vectors and the new ones is zero or close to zero, the machine-learning method may stop. The variation between two versions of the second latent vectors may be evaluated using any measure of distance between the two second latent vectors.

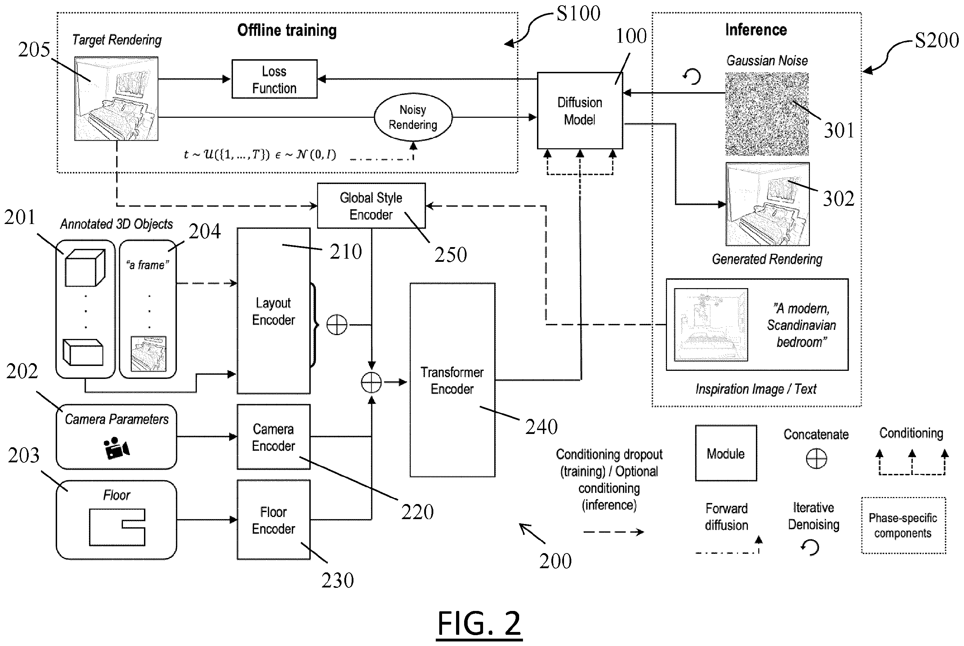

With reference to FIGs. 2 to 9, examples of implementations of the generating method and the machine-learning method are now discussed.

The trained model is conditioned on the outputted scene encoding tensor (i.e., is 3D-aware). This allows leveraging knowledge about the 3D structures and relationships of the objects in scenes or environments and therefore producing more accurate, natural-looking and immersive content thanks to an improved consideration for e.g., perspective, occlusion or lightning factors. In particular, the trained model solely comprises a scene encoder and a single conditional diffusion model that are specifically trained end-to-end for this task. It does not leverage large and general-purpose pretrained image synthesis priors, does not comprise several training phases to separately train modules, nor requires training a neural volume renderer or a NeRF for each generated scene. 3D-awareness is incorporated thanks to the layout of the training samples, so it does not rely on separate depth estimators that are usually flawed and propagate errors, nor requires multi-view datasets for training. The generating method also enhances user interactions and level of controllability.

The machine-learning method and the generating method solve the challenge of generating multiple renderings of a given scene that are visually and functionally consistent across different viewpoints using a 3D-Aware, style-conditioned generative model such as the one disclosed in the European patent application EP24305100, which is incorporated herein by reference. "Visually and functionally consistent" means that the overall appearance of the renderings of the scene and its elements is as close as possible from one another, thus reinforcing the impression that a single scene has been rendered from multiple viewpoints. When generating multiple images using such forward-only (i.e., without a phase of per-scene optimization) generative backbone, each generation is made independently which makes assuring the consistency across multiple results very challenging.

The machine-learning method and the generating method solve this technical problem using a Deep Learning based approach. Its pipeline may be divided into two main stages. During the inference stage, the generating method performs a view-dependent latent manipulation of the conditioning signal to dramatically improve the visual consistency across generated views.

In a first stage, the machine-learning method performs a supervised training of a 3D-aware generative model that is conditioned on a 3D layout, a target camera pose, and a latent vector $\eta$ encoding the visual content and semantic of the target rendering. The trained module computing $\eta$ is denoted $\tau$, and may be able to take at least images as input, $\tau$ may be a pretrained multimodal foundation model and conditioning dropout may be performed on $\eta$ during training (i.e., $\eta$ is randomly replaced by a null vector during training, so that inference can be performed by providing $\eta$ - conditional generation, or not - unconditional generation).

The goal of the supervised training phase is to give the model the ability to reproduce (or generate) a 2D reference image given as input the corresponding scene annotations (i.e., layout) of a 3D scene.

In a second stage (inference), The generating method involves calling the iterative denoising process at least twice. The generating method first generates a batch of renderings of a given scene from different viewpoints. The generating method then computes the semantic latent embeddings $\eta$ of the generated images using $\tau$. Then, the generating method comprises computing a similarity score between each pair of camera viewpoints. Such similarity score measures the number of elements that are represented in both camera's fields of view. For each camera viewpoint, the generating method comprises computing a barycentric combination of the semantic latent embeddings $\eta$ that is weighted by the similarity scores between the considered viewpoint and the other ones. Finally, a new batch of renderings is generated for the different viewpoints, the generation of each viewpoint being conditioned on its respective barycentric latent embedding.

In examples, this may be applied several times, e.g., until the similarity between barycentric embeddings of a subsequent generation stage and semantic embeddings of the current generated images for the different viewpoints hits a threshold.

Key advantages of the machine-learning method and the generating method include:

- Generate consistent views at low cost: the generating method has the crucial advantage of being efficient in terms of computation and implementation. Indeed, it is an inference method that, firstly, does not rely on a costly optimization to maintain coherence across multiple views and, secondly, does not require to (re)train a dedicated neural network for the task, and therefore does not rely on multi-view datasets that are typically hard to acquire. It may easily be implemented to be used with an existing model at inference. Furthermore, the generation of multiple coherent views of a scene may be parallelized at inference by leveraging batching.
- Flexibility: the generating method may be used to generate consistent renderings of a 3D scene. When the diffusion backbone has been trained with conditioning dropout on the style latent embedding, this generation may be performed both conditionally (when an input style embedding is given) or unconditionally.
- Improved consistency across generated views: the ability to generate several renderings of a given scene that are both realistic and consistent unlocks numerous practical applications. Indeed, the generating method may be used for generating several views of the same scene without removing or adding visual elements or altering those that are represented on several generated views. On top of that, multi-view consistency is a major requirement to achieve successful 3D reconstruction, i.e., reconstructing a 3D model from multi view images of a scene.

Definitions of certain terms are now presented.

Deep Neural Networks (DNNs) are a powerful set of techniques for learning in Neural Networks which is a biologically inspired programming paradigm enabling a computer to learn from observational data. In object recognition, the success of DNNs is attributed to their ability to learn rich midlevel media representations as opposed to hand-designed low-level features (Zernike moments, HOG, Bag-of-Words, SIFT, etc.) used in other methods (min-cut, SVM, Boosting, Random Forest, etc.). More specifically, DNNs are focused on end-to-end learning based on raw data. In other words, they move away from feature engineering to a maximal extent possible, by accomplishing an end-to-end optimization starting with raw features and ending in labels.

Generative image models are a type of deep neural networks, which are trained on large image datasets to learn the underlying distribution of the training images. By sampling from the learned distribution, such models can produce new images that possess characteristics from the ones in the training dataset. GANs (Generative Adversarial Networks), VAEs (Variational Autoencoders), and Diffusion Models are widely recognized as the most popular generative image models, with Diffusion Models currently regarded as the state-of-the-art approach in the field.

Diffusion models are a type of deep learning models that can be used for image generation. They aim to learn the structure of a dataset by modeling how data points diffuse through the latent space. Diffusion models consist of three components: the forward process, the reverse process and the sampling phase. In the forward process, Gaussian noise is added to the training data through a Markov chain. The goal of training a diffusion model is to teach it how to undo the addition of noise, step by step. This is done in the revere process, where the diffusion model reverses the noise addition performed in the forward process, and therefore recovers data. During the sampling phase, an image generation diffusion model starts with a random Gaussian noise image. After being trained to reverse the diffusion process on images from the training dataset, the model can generate new images that resemble the ones in the dataset. It achieves this by reversing the diffusion process, starting from the pure Gaussian noise, up until a clear image is obtained.

In the context of generative AI models for image synthesis, conditioning refers to the process of injecting additional information into the image generation process in order to get results which match user-driven constraints. Conditioning can come in various forms, including text (e.g., DALL-E 2, Midjourney or Stable Diffusion) or image (e.g., ControlNet or semantic segmentation) for example.

The (3D) bounding box of a three-dimensional (3D) object is the smallest rectangular cuboid that encloses the object. Its position, its dimension and its orientation characterize a 3D bounding box.

The "viewpoint" represents the perspective or "camera" from which the render is captured. It may comprise four components: a position, an orientation, and a field of view and a pitch. The position and orientation of the viewpoint and those of the bounding boxes may be defined within a single frame of reference.

The term "3D abstracted scene" represents a list of labeled bounding boxes (the layout of the 3D scene) representing objects in a scene (the labels correspond to the class of the object), a viewpoint, and optionally other elements which may enrich the description of the environment (information about the shape of a room for instance). The adjective "abstracted" highlights that objects in the scene have no visual representation and are not defined beyond the characteristics of their bounding boxes and their label.

A scene encoder refers to a specialized deep neural network that learns to extract comprehensive representations from a 3D scene, which may contain spatially positioned objects, a layout, or a viewpoint. The scene encoder takes in diverse inputs, depending on its specific architecture and the user's needs and generates a high-dimensional vector output. This encoded representation should capture the important features of the scene and serves as valuable input for subsequent stages in the deep learning model.

FIG. 2 illustrates a flowchart of an example of the machine-learning method and an example of implementation of a 3D-aware, style-conditioned image generation model that may be used to sample consistent multi view renderings (2D images) in the generating method.

The pipeline is composed of a (latent) diffusion model 100 that is conditioned by a novel 3D scene encoder 200. Like other deep learning models, it features an offline stage S100 (training of the model by executing the machine-learning method) and an online stage S200 (generation of 2D images by applying the said model, also called inference stage).

The offline training stage S100 is now discussed in more details. The objective of this stage is to simultaneously (i) train the scene encoder 200 to produce a comprehensive mathematical representation that can be used for conditioning and (ii) train the diffusion model 100 to generate images from noise. The scene encoder 200 takes as input a set of elements which characterize the 3D scene (the layout of the 3D scene) and outputs a scene encoding tensor. The diffusion model 100 takes as input a noisy version of the image to be generated as well as a scene encoding tensor, and outputs a denoised version of the input image. This training is end-to-end: a single loss value is computed and backpropagated to adjust the weights of both the diffusion model and of the scene encoder. Setting up the training stage may comprise the following sub-tasks:

- Data preprocessing step: data samples of the dataset, especially the scene annotation (i.e., the layouts), might be processed so they can be passed to the scene encoder. The preprocessing stage may optionally include computing offline (before the training experiment) the object semantic embeddings as well as global style embeddings of the training dataset, using pretrained encoders, e.g., from a multimodal foundation model 250. Computing and storing these embeddings offline help reducing memory usage and computation during training.
- Definition of the architecture step: the scene encoder 200 may return a single fixed-size tensor embedding for the whole scene being rendered. The diffusion model 100 may take as input a noisy version of an image as well as a scene encoding vector. It may return an estimation of the noise added to the image and use it to propose a less noisy version of the input image.
- Definition of the conditioning dropout scheme: depending on the available modalities representing each object of the dataset, a multinomial probability distribution may be designed, defining the probability to pick each of the modality from which the object semantic embedding is computed, or the null token. The probability to pick the null token is the dropout rate. At each training iteration, the machine-learning method may comprise sampling from this probability distribution independently for each object. Similarly, another dropout rate may be set to implement conditioning dropout on the scene global style embedding.
- Definition of the training loss step: the training loss function may measure the distance between the predicted noise in the input image and the true noise in the image added through the forward process.
- Training step: the training may be performed by iterating several times over the dataset (pairs of images and scene annotations).

The image generation/inference stage S200 is now discussed in more details. This stage aims at, given an abstract 3D scene, output a rendering which matches its viewpoint. For this stage, the generating method may comprise the following sub-tasks:

- Determining of the scene embedding vector step: using the scene encoder 200 and the input abstracted 3D scene, computing a scene embedding vector. The abstracted 3D scene does not necessarily have to be part of the database (e.g., it can be user-created or generated using other techniques). Optionally, object semantic embeddings 204 (conditioning signals for objects), that may be computed e.g., from user-provided prompts such as images or text descriptions, may be associated to any object of the scene to guide the generation. Similarly, a scene style embedding 205 (conditioning signal for the 3D scene) may also optionally be passed.
- Generating a random Gaussian noise image step: the Gaussian noise image 301 may have the size of the desired final image when training in the pixel space, or of the size of the VAE's latent space when training a Latent Diffusion Model.
- Iteratively denoise the generated image step: using the diffusion model 100, first denoising the random Gaussian noise image 301 and iteratively denoising the output of the diffusion model. The U-Net denoiser (DNN backbone of the diffusion model) may be conditioned on the scene embedding vector using cross-attention between the layers of the U-Net and the scene embedding vector. After a fixed number of denoising steps, the final clear image 302 is generated. Since the diffusion model has been trained with conditioning dropout, classifier-free guidance may also be performed during the denoising, to push the prediction in the direction of the conditional model output and away from the unconditional model output, and therefore better represent the conditioning signal, e.g., a scene style embedding computed from a textual description.

An example of implementation of the previously described general framework is now discussed. This example focuses on the generation of interior scenes.

Details about the acquisition and the content of the dataset used for training the model are now presented. The data used may be extracted from HomeByMe® renderings taken by users (i.e., 2D images created by real users). Whenever a high-quality rendering is taken in the application, a rich annotation file is saved jointly with the image. The raw data from this annotation file contains information about the rendering (semantic segmentation map and/or 2D bounding boxes of the visible objects) as well as information about the scene the rendering was taken in (3D bounding boxes of the objects, room's shape and/or viewpoint). The dataset also comprises object-level annotations: 3D mesh, object category, image thumbnail of the object, material data, textual annotations describing the object, etc. Out of this raw data, three elements may be extracted:

- Annotated objects: for each object in the scene (not necessarily visible from the render taken by the user), the annotation files contain a list of miscellaneous features describing the object. Especially, it defines object 3D bounding boxes by two 3D points corresponding to two opposite vertices of the bounding box. It also indicates the object category from a total of 174 possible classes in the HomeByMe dataset.
- Viewpoint: the viewpoint from which the user's rendering was taken may be saved in the annotation file. In particular, the position of the camera, its orientation and its field of view are retrieved and later used in the pipeline.
- Room's shape: the room's shape is stored in the annotation file as a list of 2D points representing the corners of the room.

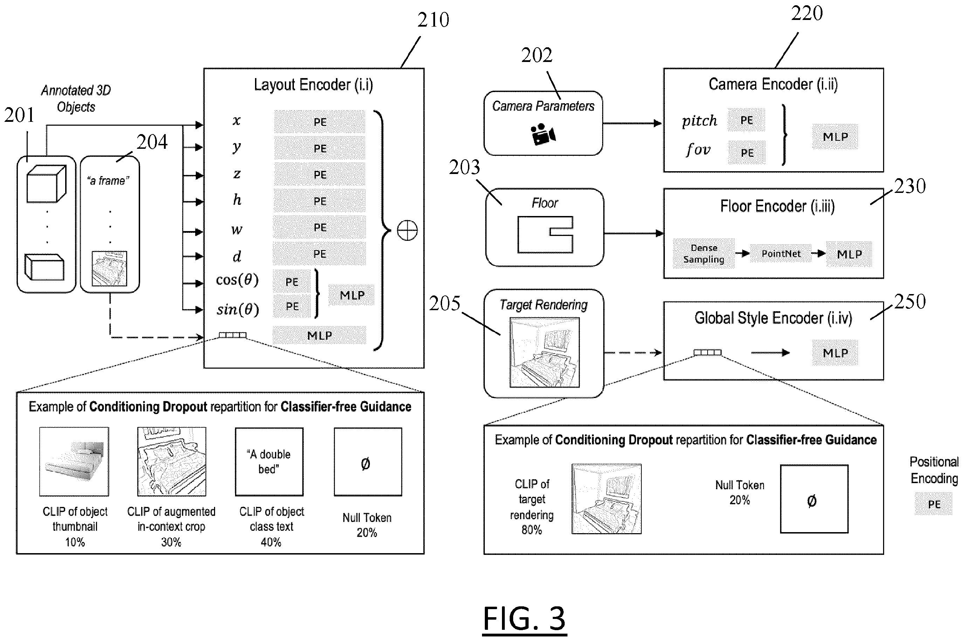

FIG. 3 illustrates an example of the scene encoder 200 of FIG. 2. The scene encoder 200 includes a layout encoder 210 configured for encoding the set of bounding boxes 201 and the conditioning signals 204 for objects represented by the set of bounding boxes 201. The layout encoder 210 takes as input, for each bounding box of the set 201, parameters representing a position, a size and an orientation in the 3D scene of the object represented by the bounding box, and, when a conditioning signal has been inputted for the object represented by the bounding box, the projection, by the multimodal encoder 250 (also referred to as global style encoder), of this conditioning signal. The scene encoder 200 further includes a floor encoder 230 configured for encoding the boundaries 203 of the 3D scene. The scene encoder 200 further includes a camera encoder 220 configured for encoding the viewpoint 202. As illustrated in FIG. 2, the scene encoder 200 further includes a transformer encoder 240. The transformer encoder takes as input a concatenation of the set of bounding boxes 201 encoded by the layout encoder 210, the viewpoint 202 encoded by the camera encoder 220, the boundaries of the 3D scene 203 encoded by the floor encoder 230 and the projection, by the multimodal encoder 250, of the conditioning signal for the 3D scene 205. The transformer encoder 240 outputs the scene encoding tensor.

The offline training stage S100 is now discussed in more details.

The machine-learning method may comprise, prior to the training step, a data processing step for processing the layout and viewpoint of each 2D image of the dataset.

The data processing step may comprise a first step for processing, in each 3D scene, the 3D bounding boxes. The first step may comprise converting the raw 3D bounding boxes from a representation based on two opposite vertices to a representation by their position (x, y, z), their dimension (width w, height h, depth d) and their orientation. There may be only one rotational degree of freedom for the objects present in the scene: their rotation around the vertical axis. As a consequence, the machine-learning method may use only a single angle $\theta$ to define the orientation of the bounding boxes. In practice, the machine-learning method may use a different representation and encode the orientation of the 3D bounding box by a pair corresponding to $(\cos(\theta), \sin(\theta))$. Such a parametrization is mathematically equivalent to the single value parametrization, but it forces the continuity of the deep learning model for $\theta = 0$ and $\theta = 2\pi$. This is benefit for the convergence of the model. As a result, the processed 3D bounding boxes are defined by a list of 8 parameters (x, y, z, w, h, d, $\cos(\theta)$, $\sin(\theta)$).

The data processing step may comprise a second step for processing object's conditioning signals of text type (class or description). Each object from the HomeByMe dataset may be described by a class which provides a broad description (chair, table or door). There may be a total of 174 classes in the HomeByMe dataset.

The data processing step may comprise a third step for processing the boundaries of the layout. The third step may comprise increasing dimensionality of the floor points. The raw points from the data annotations are 2D points (x, y) because their Z coordinate is implicitly 0. The 2D points are turned into 3D points by using 0 as the Z coordinate. This step is necessary so that the 3D points are affected by the transformations described later.

The data processing step may comprise a fourth step for processing coordinates of the bounding boxes, notably from world coordinates to camera coordinates. The raw positions and orientations found in the annotation file are using world coordinates defined in HomeByMe. To reduce the number of learned parameters, encourage robustness and thus facilitate convergence, the data processing step may perform a change of coordinate system, which goes from the original world coordinates to a coordinate system that is based on the viewpoint. In the new coordinate system, the origin of the world is set to the camera position and the basis vector are selected so that: the "Z" basis vector is unchanged, the "Y" basis vector is the projection of the viewpoint's forward vector on the plane orthogonal to the "Z" vector, and the "X" vector is orthogonal to the first two. Thanks to this change of basis, a viewpoint can be described purely by two scalar values: the field of view (FOV) and the pitch (the angle its forward vector makes with the "Y" basis vector). This change of basis affects the position and rotation of all the objects and points in the scene. Such a change of basis is optional but helps with the convergence of the model.

The architecture of the scene encoder is now discussed in more details.

The scene encoder is composed of four components: the layout encoder, the camera encoder, the floor encoder and the transformer module (or transformer encoder) (see FIG. 3).

The layout encoder is now discussed. The scalar values (x, y, z, w, h, d, cos ($\theta$), sin ($\theta$)) which describe each bounding box in the scene may be passed through a Positional Encoding module (PE) which deterministically increases the dimension of the scalar value. In this example, scalar values are represented with a vector in $\mathbb{R}^{64}$. Positional encoding enables the generation of diverse representations of the same scalar value, allowing deep learning models to capture more nuanced information when necessary. The use of positional encodings is useful to improve the deep neural network convergence.

After the positional encoding modules, the position and dimension of the bounding boxes which are respectively originally described by three scalar values are described by a 192-dimensional vector (3 × 64 = 192). On the other hand, the rotation which is originally described by a pair of scalar values is described by a 128-dimensional vector after the positional encoding. To ensure that the position, dimension and rotation are weighed in similarly by the model, the high dimensional version of the rotation is passed to a multi-layer perceptron (MLP) which maps it from $\mathbb{R}^{128}$ to $\mathbb{R}^{192}$. This step improves the model's convergence.

The object semantic embeddings computed by CLIP's pretrained text and image encoders are in $\mathbb{R}^{512}$. In the layout encoder, they are passed to a trainable MLP that compresses them to $\mathbb{R}^{448}$.

All the previously computed vectors are concatenated in a single vector in $\mathbb{R}^{1024}$. This vector is a token representing a labelled 3D bounding box.

The camera encoder is now discussed. The camera or viewpoint is fully described by two scalar values: the field of view and the pitch. Both of these values are sent to a higher dimension ($\mathbb{R}^{64}$) using a positional encoding, and then fed to a multi-layer perceptron which maps them to $\mathbb{R}^{1024}$. This vector is a token representing the viewpoint in the scene.

The floor encoder is now discussed. The floor is only represented by an unordered set of 3D points corresponding to its corners. Such a representation is ambiguous and cannot be easily interpreted by the deep neural network. As an alternative, the data processing step may comprise densely sampling points along the walls of the room so that the borders of the room are represented by a 3D point cloud, thereby generating a set of points sampled along the boundaries. This 3D point cloud is then fed to a PointNet module which outputs an embedding vector in $\mathbb{R}^{1024}$. This embedding is itself fed to a multi-layer perceptron which maps the vector to $\mathbb{R}^{1024}$. This final vector is a token representing a floor point. The floor encoder improves the quality of the generated images.

The multimodal encoder (or Global style encoder) is now discussed. Similar to the object semantic embeddings, the scene's global style embedding that is obtained by applying a trained CLIP image encoder to the target HQ rendering is a latent vector in $\mathbb{R}^{512}$. It is passed to MLP that maps it to $\mathbb{R}^{1024}$. The resulting vector is a token representing the overall semantic of the scene.

The transformer module is now discussed. The 3D object tokens, the camera token, the floor token and the scene semantic token are all concatenated to form a sequence of tokens. These tokens are independent from one another. In order to capture relationships between the different elements of this sequence, a transformer module is used. The transformer module operation may be improved with a fixed input size because of its intrinsic architecture. However, the sequence built through the concatenation of the outputs of the layout encoder, the camera encoder, the floor encoder and the multimodal encoder may have a variable length as the number of 3D bounding boxes in a scene may vary from scene to scene. To be compatible with the transformer architecture, the concatenation of the vectors sequence may be padded with "zero" tokens ( $0_{\mathbb{R}^{1024}}$ ) so that the sequence is of fixed length. In coherence with the distribution of number of 3D bounding boxes in the dataset, the data processing step may pad the concatenation of the vectors to be 50 tokens long.

The sequence may thus be represented as a tensor from $\mathcal{M}_{1024 \times 50}(\mathbb{R})$. This tensor may be fed to the transformer module, which may output the final scene embedding vectors.

The architecture of the diffusion model is now discussed. The model may comprise one of two versions of the diffusion model: one which acts directly in the image space and the other one which acts in the latent space of a pretrained VAE for increased final image dimension. In the first case, the diffusion occurs directly on the pixels from the image while in the second case, the diffusion occurs on a latent version of the image, which is then decoded using the VAE decoder. The two approaches are not fundamentally different and do not require much change other than the introduction of the VAE.

The diffusion model has an architecture for conditional generation, featuring a U-Net backbone comprising four down blocks and four up blocks. Notably, the last two down blocks and the initial two up blocks may be enhanced with cross-attention, utilizing the scene embedding vectors. The number of up/down blocks and the number of blocks enhanced with cross-attention can vary depending on the needs and the means of the user. This configuration offers the best compromise between image quality and training time.

The definition of the conditioning dropout scheme is now discussed. In particular, the conditioning dropout on object semantic embeddings is firstly discussed. For each object and at each training iteration, the machine-learning method comprises drawing the object semantic embedding to be passed to the layout encoder according to the following provability law (see Figure 3).

- CLIP encoding computed from the string representation of the object's class. P = 0.1.
- CLIP encoding computed from the object thumbnail. P = 0.3
- CLIP encoding computed from the object's augmented in-rendering crop.

- Null token. The machine-learning method comprises using a "zero" token $0_{\mathbb{R}^{512}}$ to indicate the absence of object semantic conditioning. The machine-learning method comprises using a dropout rate P = 0.2.

Other probabilities may be set. However, this repartition allows in particular the architecture to correctly interpret the CLIP latent space while also producing good results when no object semantic conditioning is provided.

The conditioning dropout on scene's global style embeddings is secondly discussed. At each training iteration, the global style embedding computed by applying CLIP encoder on the target rendering is replaced by a "zero" token $0_{\mathbb{R}^{512}}$ with a dropout rate P = 0.2.

The training loss used for the training is now discussed. The diffusion model may be trained using different losses/parameterizations. At each training iteration and for each training image, a timestep $t$ is uniformly sampled $t \sim \mathcal{U}$ ({1, ..., T}), and Gaussian noise is added to the image according to a variance schedule $\beta_t$, as introduced in the document by Jonathan Ho et al., "Denoising Diffusion Probabilistic Models", in NeurIPS 2020, which is incorporated herein by reference. The diffusion model tries to predict the noise which was added to the image. The loss used in that case is the mean squared error between the true noise $\varepsilon$ and the predicted noise $\varepsilon_\theta$ ($\theta$ indicates that the prediction is done based on the model's parameters).

$$MSE = \frac{1}{\#channels \times \#pixels} \sum_{\forall channels \ \forall pixels} (\epsilon - \epsilon_\theta)^2$$

Alternatively, other commonly used diffusion training parameterizations/ losses may be interchangeably employed. For example, a *v*-prediction parameterization with min-SNR Weighting value of 5.0 leads to a good image quality/resolution/computation trade-off (e.g., as discussed in the paper by Tiankai Hang et al., "Efficient Diffusion Training via Min-SNR Weighting Strategy", in ICCV 2023).

The generation/inference stage S200 is now discussed in more details. The diffusion model may be configured with different techniques at inference. For example, two different sampling processes may be used: Denoising Diffusion Probabilistic Models (DDPM) and Denoising Diffusion Implicit Models (DDIM). DDIM may for example offers the best balance between inference speed and image quality. When inferring the image for a given 3D abstract scene, the generation may take about 1 second on a NVIDIA RTX A6000 GPU.

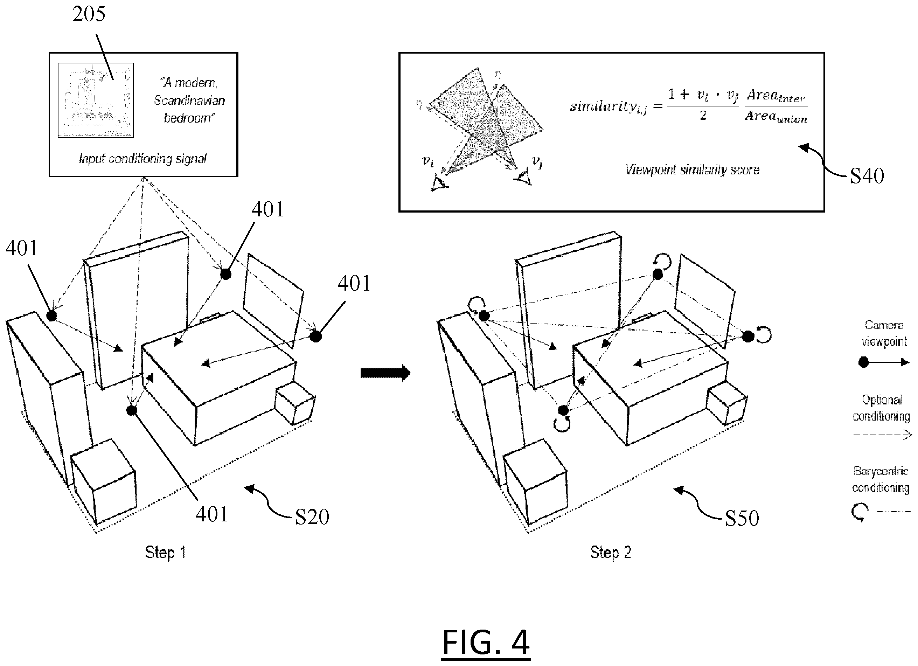

FIG. 4 illustrates an example of implementation of the generating method.

The offline training stage of the 3D-aware, style-conditioned image generation model is discussed first. The generating method applies an image generation model, that may be trained according to the machine-learning method, e.g., with conditioning dropout. In particular:

- The generative diffusion model may be conditioned on a style/semantic embedding (a latent vector) capturing the style/semantic of the overall scene. Such embedding may be computable from an image, e.g., a rendering of a target scene. This conditioning may be performed with conditioning dropout during training so inference may be made both conditionally and unconditionally. In the latter case, classifier-free guidance (CFG) may be applied using the Global Style Encoder and its training strategy.
- The generative diffusion model may also be 3D-aware and pose-conditioned. It means that it is conditioned on the camera pose from which a rendering of a scene is generated, and on an abstract 3D representation of the scene, made of e.g., annotated 3D bounding boxes of the objects. Such conditioning may be performed by the layout encoder and the camera encoder. However, the training strategy of the layout encoder that allows to guide the appearance of individual objects from multimodal inputs during inference is optional. The guidance may greatly benefit to the generating method as it allows to better constrain the model on the desired appearance and functionality of each object.

The generating method is now discussed. The generating method is a two-stage inference with view-dependent manipulation of the conditioning signal. The generating method may be implemented in the following five steps using a trained model and dramatically improves the coherence between several views of a scene.

(1) The first step S20 comprises a 1$^{st}$ generating stage, which comprises generating a batch of $n$ renderings (or 2D images) of a 3D scene viewed from $n$ camera poses 401 (or viewpoints) using the trained 3D-aware, style-conditioned generation model. These camera poses 401 may be user-defined or suggested based on the layout of the scene. If the model has been trained with conditioning dropout on the style latent $\eta$, conditioning the generation on such embedding is optional and CFG may be applied. Here, a conditioning style latent $\eta^{(0)}$ may be computed from a conditioning image 205 or other modalities depending on the nature of $\tau$.

(2) The second step S30 comprises the latent embeddings computation, which comprises computing the style latent representations $(\eta_i^{(1)})_{1 \leq i \leq n}$ of the generated renderings obtained in (1) using $\tau$.

(3) The third step (first part of step S40) comprises the camera similarity scores computation, which comprises computing a *similarity score* between each pair of camera viewpoints. The method computes $\frac{n(n-1)}{2}$ distinct *similarity scores.* They measure the field of view intersections between the camera poses, so that pairs that have a lot of elements that are represented in both fields of view will have a high similarity score. Examples of camera similarity scores are given in the following.

(4) The fourth step (second part of step S40) comprises the latent embeddings barycentric manipulation, which comprises obtaining new latent conditionings $(\eta_i^{(2)})_{1 \leq i \leq n}$ by computing for each of the $n$ camera poses a barycentric combination of the latent vectors $\eta^{(1)}$ weighted by their respective *similarity score* with the camera of interest.

(5) The fifth step S50 comprises a 2$^{nd}$ generation stage, which comprises generate a new batch of $n$ renderings. Each rendering generation is conditioned on the respective style embedding $\eta^{(2)}$ of its camera pose.

An example of implementation of the previously described framework is now presented. This use case focuses on the generation of interior scenes. The 3D-aware, style-conditioned diffusion model used at inference has been obtained following the training procedure and dataset acquisition and preprocessing detailed previously. Examples of implementation of the generating method are now provided. Note that in this example, $\tau$ is a trained CLIP model, so the style embeddings $\eta$ lie in the shared CLIP latent space between text and image.

**(1)** The 1$^{st}$ generation stage (step S20): This generation stage is performed the same way as previously discussed, using a single abstract 3D layout and floor plan as input but for $n$ camera viewpoints. It can be conditioned on a CLIP latent $\eta^{(0)}$ obtained from a text prompt or an inspiration image, or without any global style conditioning.

**(2)** The step of latent embeddings computations (S30): the generating method comprises computing the style latent

vectors $\eta^{(1)}$ by applying the trained CLIP image encoder on the generated renderings.

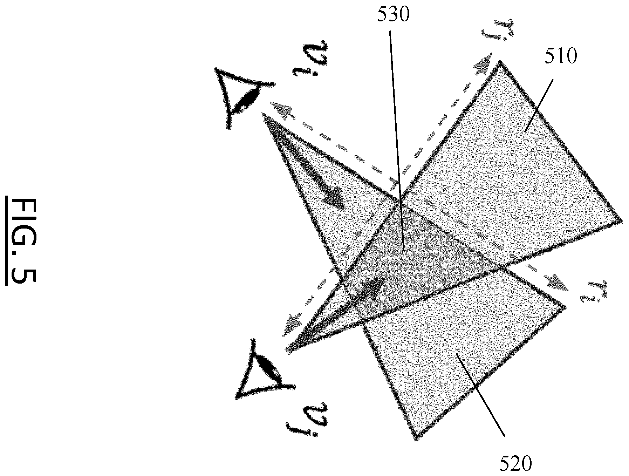

**(3)** The step of camera similarity scores computation (first part of step S40): the generating method comprises measuring the field of view intersection 510 between all the distinct pairs of camera viewpoints using a 2D approach, summarized on FIG. 5 and the formula:

$$similarity_{i,j} = \frac{1+ v_i \cdot v_j}{2} \frac{Area_{inter}}{Area_{union}}$$

In FIG. 5, camera areas (viewpoints) are represented here as isosceles triangles 510, 520. The figure shows the field of view intersection 530 measured between the viewpoints 510 and 520. The considered camera range distances $r_i$, $r_j$ for the similarity computation may be derived from the room's walls/floor plan or fixed to a sensible predefined value (e.g., 5 meters for a bedroom scene).

These scores are reported in a $n \times n$ similarity matrix $S_{i,j}$ = $similarity_{i,j}$ , $\forall$ i, j $\in$ [1, n]

This matrix is symmetric ($S_{i,j}$ = $S_{j,i}$) and has unit diagonal ($S_{i,i}$ = 1) using the above-proposed formula. This similarity matrix is further normalized along the rows so that $\sum_{j=1}^{n} S_{i,j} = 1$ , $\forall$ i $\in$ [1, n].

This formulation may be seen as a 2D approximation and may be effectively evaluated for several viewpoint pairs. A more precise similarity score may however be computed in the 3D space with a similar approach by computing the 3D volume intersections of camera fields of view. The 2D approximation largely decreases the complexity both in terms of computation and implementation effort and is precise enough for most common camera poses.

**(4)** The step of latent embeddings barycentric manipulation (second part of step S40): For each camera viewpoint, a barycentric latent is obtained by computing a mean weighted by similarity scores:

$$\forall i \in [1, n], \qquad \eta_i^{(2)} = \sum_{j=1}^{n} S_{i,j} * \eta_j^{(1)}$$

**(5)** The 2nd generation stage (step S50): the generating method comprises generating a new batch of renderings as in the 1st stage but using $\eta^{(2)}$ as conditioning style latents for the respective style latent vectors.

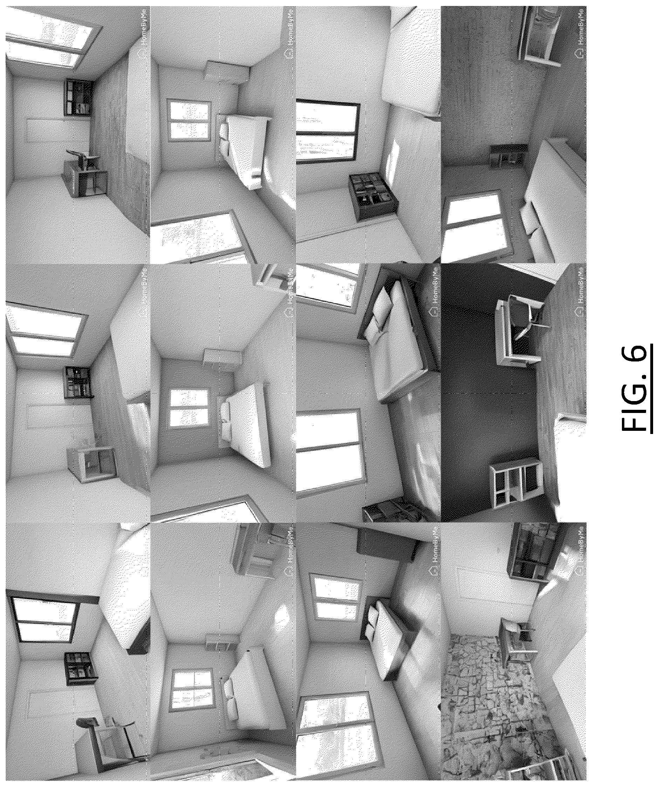

Examples of results are now discussed in reference to FIGs. 6 to 8. Especially, qualitative generation results are presented. For a given abstract 3D scene, the generating method generates 2D images (renderings) from multiple camera poses, without specifying an initial style conditioning $\eta^{(0)}$.

FIG. 6 shows a plurality of first 2D images acquired from several viewpoints generated at step S20. Here are the images from the 1st generation stage. Even though the input 3D layout is the same for each view, the visual appearance of the scene may dramatically change from one view to another, thus leaving the impression that different scenes have been rendered.

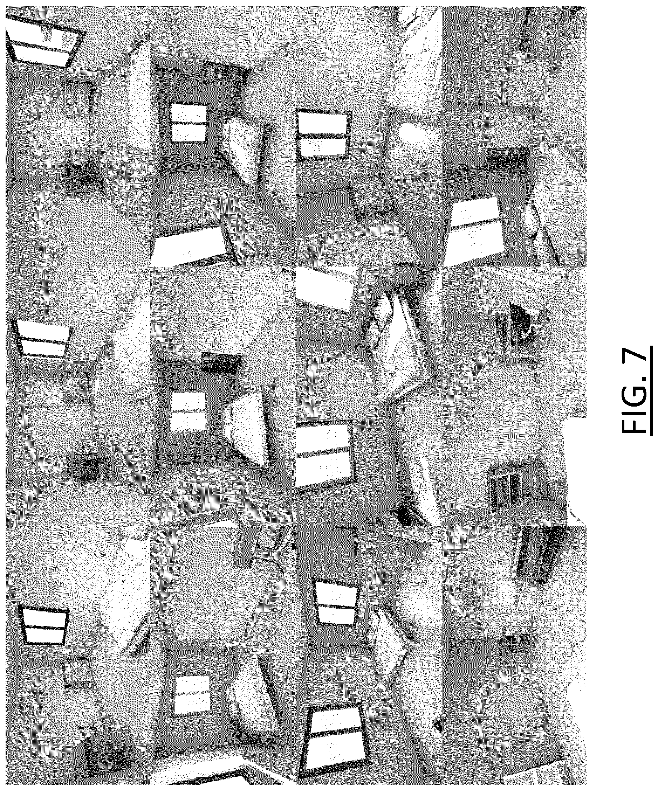

FIG. 7 shows the plurality of second 2D images generated at step S50 for the plurality of first 2D images shown in FIG. 6. FIG. 7 shows that the overall appearance of the scene is preserved across the different generated second 2D images.

Details about the generation time using the generating method are now presented. Using the previously presented generation backbone, generating 30 904x512 views of a scene took 37 seconds on a RTX A6000 GPU. As a comparison, generating the same number of views without applying the generating method may take 18 seconds, which makes sense since the generation is performed twice in the generating method. The generating method therefore takes no more time than performing twice the step of generating the plurality of 2D images and is therefore much faster than other methods requiring a costly optimization stage.

Quantitative metrics are now presented. Especially, results of an evaluation performed for quantitatively assessing the ability of the generating method to improve the visual/semantic consistency across several generated views of a given scene are presented. The evaluation includes the following steps:

- In a first step, nine evaluation 3D scenes are selected. For each of them, at least 16 renderings viewed from different and various camera views are generated by repeating step S20 (1st generation stage).
- Then, the CLIP embeddings computed from the generated images after the 1st generation stage (step S30) are stored.
- The steps S40 and S50 of the generating method are then performed and the CLIP embeddings from the final generated images (after the 2nd generating stage) are computed.
- For both set of CLIP embeddings (obtained after the 1st and 2nd generating stages), the mean of cosine similarities between all pairs of CLIP embeddings in the set are computed.

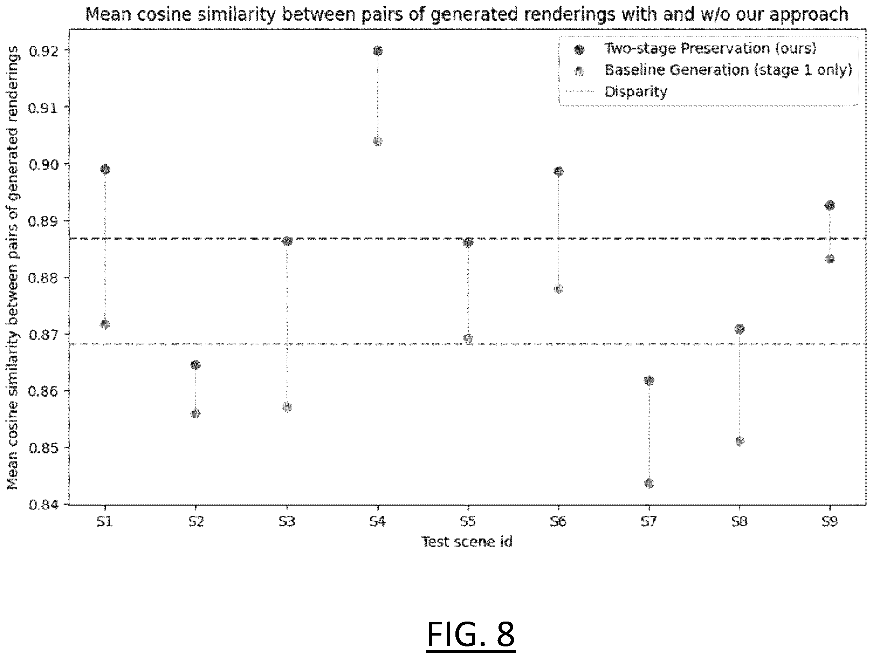

The resulting values are reported in the plot of FIG. 8. The plot shows that the mean cosine similarity scores between pairs of generated renderings are consistently higher when applying our novel generation approach on all test scenes, indicating that visual/semantic information are better preserved across the different views. The dashed horizonal lines indicate the mean scores.

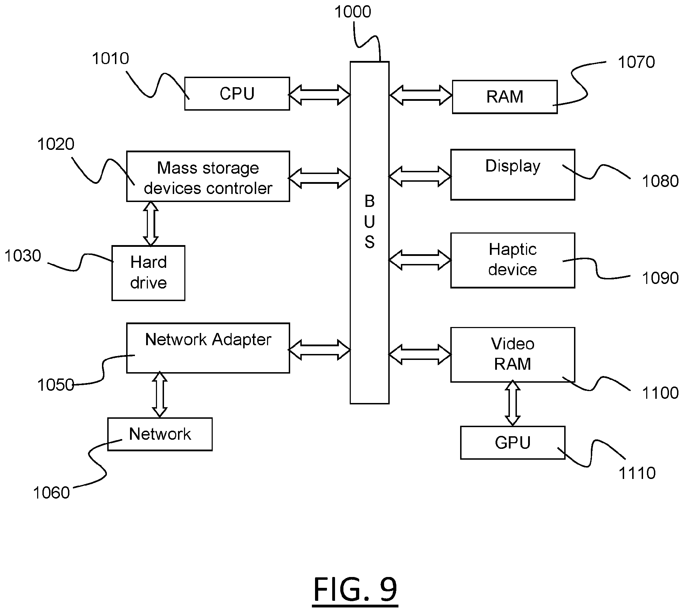

FIG. 9 shows an example of the system, wherein the system is a client computer system, *e.g.* a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1.  A computer-implemented method for generating a plurality of 2D images of a 3D scene, the method comprising:

    - Obtaining (S10):

        ○ arrangement data comprising a layout of the 3D scene; and
        ○ a machine-learning model configured for generating a 2D image, the model taking as input a viewpoint, the layout of the 3D scene and a latent vector, the model comprising a scene encoder and a generative image model, the scene encoder taking as input the layout of the 3D scene, the viewpoint and the latent vector, and outputting a scene encoding tensor, the generative image model taking as input the scene encoding tensor outputted by the scene encoder and outputting the generated 2D image;

    - generating (S20) a plurality of first 2D images of the 3D scene each having a respective viewpoint by, for each first 2D image, applying the model to the respective viewpoint of the first 2D image, the layout of the 3D scene and a respective initial latent vector;
    - for each generated first 2D image, computing (S30) a first latent vector by applying a global projector to the generated first 2D image;
    - for each generated first 2D image, computing (S40) a second latent vector as a weighted combination of the computed first latent vectors; and

- generating (S50) a plurality of second 2D images of the 3D scene by applying, for each given viewpoint of the first 2D images, the model to the given viewpoint, the layout of the 3D scene and the computed second latent vector.

2. The generating method of claim 1, wherein the computing (S40) of the second latent vectors comprises computing a viewpoint overlapping measure for each pair of first 2D images, the second latent vector being a weighted combination of the first latent vectors with the viewpoint overlapping measures.

3. The generating method of claim 2, wherein the viewpoint overlapping measure of each pair $i, j$ of first 2D images is computed based on the formula:

$$similarity_{i,j} = \frac{1 + v_i \cdot v_j}{2} \frac{Area_{inter}}{Area_{union}}$$

wherein $similarity_{i,j}$ is a similarity score, $v_i$ and $v_j$ are unit vectors representing camera directions of respectively the first 2D images $i, j$, $Area_{inter}$ and $Area_{union}$ are areas respectively of intersection and union between the viewpoints of the pair $i,j$ of first 2D images.

4. The generating method of claim 2, wherein the viewpoint overlapping measure of each pair $i, j$ of first 2D images corresponds to a ratio between a number of objects present in the viewpoints of the pair $i, j$ of first 2D images and a number of objects present in each viewpoint of the pair $i, j$.

5. The generating method of any one of claims 1 to 4, wherein the arrangement data comprises a respective conditioning signal for each of at least a part of the first 2D images, the generating of the plurality of first 2D images comprises, for each of the at least part of the first 2D images, computing the respective latent vector taken as input by the model for the first 2D image by applying the global projector to the respective conditioning signal of the first 2D image.

6. The generating method of claim 5, wherein each conditioning signal has a type among a predetermined set of at least two types.

7. The generating method of claim 6, wherein the predetermined set of at least two types includes an image type and a text type.

8. The generating method of any one of claims 1 to 7, further comprising repeating the steps of computing the first and second latent vectors and the generating of a next plurality of 2D image, each repetition considering the plurality of 2D images generated in the previous repetition to compute the first and second latent vectors for the next plurality of 2D image.

9. The generating method of claim 8, wherein the steps are repeated until a criterion is reached, the criterion considering the variation of the second latent vectors during iterations.

10. A computer-implemented method for machine-learning a model used in the generating method of any one of claims 1 to 9, the machine-learning method comprising:

    - obtaining a dataset comprising training samples each including a 2D image, a layout, a viewpoint and a respective latent vector; and
    - training the model based on the obtained dataset.

11. The machine-learning method of claim 10, wherein the machine-learning method further comprises, prior to or during the training, replacing a predetermined portion of the respective latent vectors of the dataset by latent vectors having a predetermined value.

12. The machine-learning method of claim 10 or 11, further comprising, at the same time as the training the model, training the global projector.

13. A computer program comprising instructions which, when the program is executed by a computer, cause the computer to carry out the generating method of any one of claims 1 to 10 and/or the machine-learning method of any one of claims 10 to 12.

14. A computer readable storage medium having recorded thereon a computer program of claim 13.

15. A system comprising a processor coupled to a memory, the memory having recorded thereon the computer program of claim 13.

| Obtaining arrangement data and a machine-leanring model configured for generating a 2D image | S10 |

| Generating a plurality of first 2D images of the 3D scene each having a respective viewpoint | S20 |

| Computing a first latent vector for each generated first 2D image | S30 |

| Computing a second latent vector for each generated first 2D image | S40 |

| Generating a plurality of second 2D images of the 3D scene | S50 |

## FIG. 1

FIG. 2

## FIG. 3

Camera Encoder (i.ii) — 220

pitch
fov

MLP
PE
PE

Floor Encoder (i.iii) — 230

Dense Sampling → PointNet → MLP

Global Style Encoder (i.iv) — 250

MLP

Positional Encoding — PE

Example of Conditioning Dropout repartition for Classifier-free Guidance

CLIP of target rendering 80%
Null Token 20%
Ø

Camera Parameters — 202

Floor — 203

Target Rendering — 205

Layout Encoder (i.i) — 210

x
y
z
h
w
d
cos(θ)
sin(θ)

PE
PE
PE
PE
PE
PE
PE
PE
MLP
MLP

Annotated 3D Objects — 201

"a frame" — 204

Example of Conditioning Dropout repartition for Classifier-free Guidance

CLIP of object thumbnail 10%
CLIP of augmented in-context crop 30%
CLIP of object class text 40%
"A double bed"
Null Token 20%
Ø

25

$$similarity_{i,j} = \frac{1 + v_i \cdot v_j}{2} \frac{Area_{inter}}{Area_{union}}$$

FIG. 4

## FIG. 5

FIG. 6

FIG. 7

**FIG. 8**

1000

1010

CPU

B
U
S

RAM

1070

1020

Mass storage
devices controler

Display

1080

1030

Hard
drive

Haptic
device

1090

Network Adapter

Video
RAM

1050

1100

Network

GPU

1060

1110

## FIG. 9

Europäisches
Patentamt

European
Patent Office

Office européen
des brevets

# EUROPEAN SEARCH REPORT

**Application Number**

EP 24 30 6117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEXANDER SWERDLOW ET AL: "Street-View Image Generation from a Bird's-Eye View Layout", ARXIV.ORG, CORNELL UNIVERSITY LIBRARY, 201 OLIN LIBRARY CORNELL UNIVERSITY ITHACA, NY 14853, 23 August 2023 (2023-08-23), XP091586643, * page 3 - page 5 * | 1-15 | INV. G06T15/20 |
| A | YE JIANGLONG ET AL: "Consistent-1-to-3: Consistent Image to 3D View Synthesis via Geometry-aware Diffusion Models", 2024 INTERNATIONAL CONFERENCE ON 3D VISION (3DV), IEEE, 18 March 2024 (2024-03-18), pages 664-674, XP034617807, DOI: 10.1109/3DV62453.2024.00027 [retrieved on 2024-06-12] * page 664 - page 668 * | 1-15 | |
| A | XIAOFAN LI ET AL: "DrivingDiffusion: Layout-Guided multi-view driving scene video generation with latent diffusion model", ARXIV.ORG, CORNELL UNIVERSITY LIBRARY, 201 OLIN LIBRARY CORNELL UNIVERSITY ITHACA, NY 14853, 11 October 2023 (2023-10-11), XP091634293, * page 2 - page 6 * | 1-15 | TECHNICAL FIELDS SEARCHED (IPC) G06T G06N |
| A | JIAYU YANG ET AL: "ConsistNet: Enforcing 3D Consistency for Multi-view Images Diffusion", ARXIV.ORG, CORNELL UNIVERSITY LIBRARY, 201 OLIN LIBRARY CORNELL UNIVERSITY ITHACA, NY 14853, 16 October 2023 (2023-10-16), XP091637237, * page 3 - page 5 * | 1-15 | |

-/--

The present search report has been drawn up for all claims

| Place of search | Date of completion of the search | Examiner |
|---|---|---|
| Berlin | 1 December 2024 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 24 30 6117

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TAKAYUKI HARA ET AL: "MaGRITTe: Manipulative and Generative 3D Realization from Image, Topview and Text", ARXIV.ORG, CORNELL UNIVERSITY LIBRARY, 201 OLIN LIBRARY CORNELL UNIVERSITY ITHACA, NY 14853, 30 March 2024 (2024-03-30), XP091715463, * abstract * * page 2 - page 4 * | 5-7 | |
| A | Dieleman Sander: "Guidance: a cheat code for diffusion models - Sander Dieleman", , 2022, pages 1-17, XP093228845, Retrieved from the Internet: URL:https://benanne.github.io/2022/05/26/guidance.html [retrieved on 2024-11-29] * section 3. Classifier-free guidance * | 11 | |

TECHNICAL FIELDS
SEARCHED (IPC)

The present search report has been drawn up for all claims

| Place of search | Date of completion of the search | Examiner |
|---|---|---|
| Berlin | 1 December 2024 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 24305100 A

### Non-patent literature cited in the description

- **RADFORD et al.** Learning transferable visual models from natural language supervision. *International conference on machine learning, PMLR*, 2021
- **CHARLES R. QI ; HAO SU ; KAICHUN MO ; LEONIDAS J. GUIBAS.** Pointnet: Deep learning on point sets for 3d classification and segmentation. *CVPR*, 2017
- **JONATHAN HO et al.** Denoising Diffusion Probabilistic Models. *NeurIPS*, 2020
- **TIANKAI HANG et al.** Efficient Diffusion Training via Min-SNR Weighting Strategy. *ICCV*, 2023